# EUROPÄISCHE PATENTSCHRIFT

(11) **EP 2 633 971 B1**
(45) Veröffentlichungstag und Bekanntmachung des Hinweises auf die Patenterteilung: **25.07.2018**
(21) Anmeldenummer: 13151950.6
(22) Anmeldetag: 18.01.2013
(51) Int. Cl.: B29C 45/28, B29C 45/27

(54) **SPRITZGIESSDÜSE MIT VON FÜHRUNGSBUCHSEN GEFÜHRTEN VERSCHLUSSNADELN UND SPRITZGIESSVORRICHTUNG MIT EINER SOLCHEN**
INJECTION MOULDING NOZZLE WITH CLOSURE NEEDLES GUIDED BY GUIDE BUSHINGS AND INJECTION MOULDING DEVICE WITH SAME
BUSE DE MOULAGE PAR INJECTION AVEC DES AIGUILLES D'OBTURATION GUIDÉES PAR MANCHON DE GUIDAGE ET DISPOSITIF DE MOULAGE AINSI ÉQUIPÉ

(30) Priorität: 01.03.2012 DE 102012101754
(43) Veröffentlichungstag der Anmeldung: 04.09.2013
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- EP-A2- 0 153 592
- DE-T1- 10 084 280
- US-A1- 2003 091 684
- US-A1- 2011 012 293

## Beschreibung

Die Erfindung betrifft eine Spritzgießdüse mit Verschlussnadeln gemäß dem Oberbegriff von Anspruch 1 sowie eine Spritzgießvorrichtung gemäß Anspruch 15.

Spritzgießdüsen werden gewöhnlich in der Kunststofftechnik eingesetzt. Sie bilden die Schnittstelle zwischen der heißen Maschinenseite und der kalten Werkzeugseite. Auf der heißen Maschinenseite wird eine Kunststoffschmelze bereitgestellt, die über einen Zuführkanal zur Spritzgießdüse geleitet wird. Über einen Durchgangskanal in der Spritzgießdüse wird die Kunststoffschmelze anschließend zu einer Kavität in der kalten Werkzeugseite geführt. Auf der Eingangsseite der Durchgangsöffnung ist die Spritzgießdüse üblicherweise an der Maschinenseite montiert. Werkzeugseitig sitzt die Spritzgießdüse mit ihrem vorderen Ende in oder vor der Angussöffnung einer Kavität. Hierdurch ist die Spritzgießdüse starken thermischen Spannungen ausgesetzt. Weitere wichtige Anforderungen an eine Spritzgießdüse sind eine hohe Druckstabilität sowie eine konstante und gleichmäßige Erwärmung der durchströmenden Schmelze. Zusätzlich muss das vordere Ende der Spritzgießdüse gegenüber der Werkzeugseite abgedichtet sein.

Von zunehmender Bedeutung ist die Anordnung der Kavitäten innerhalb des Werkzeugs. Aufgrund steigender Materialkosten für die Werkzeuge und immer kleiner werdenden Spritzlingen wurden verschiedene Ansätze entwickelt, um den Abstand zwischen den Angussöffnungen zu reduzieren.

DE 100 84 280 D1 zeigt eine Spritzgießvorrichtung mit mindestens einer beheizten Düse, die sich nach vorne in eine Düsenaufnahmebohrung einer gekühlten Formangussplatte hinein erstreckt. Dabei ist im Anspritzbereich ein Isolierspalt zwischen der beheizten Düse und der umgebenden gekühlten Formangussplatte vorgesehen. Die Spritzgießdüse hat ein vorderes Ende, ein hinteres Ende und mehrere gleichmäßig beabstandete Ventilnadelbohrungen, die vom hinteren Ende zum vorderen Ende verlaufen. In jeder Ventilnadelbohrung ist eine längliche Ventilnadel längsverschieblich angeordnet, die mittels eines Antriebs simultan zwischen einer Offenstellung und einer Geschlossenstellung bewegbar sind. Ferner ist in der Spritzgießdüse eine Schmelzebohrung vorgesehen, welche sich von einem zentralen Einlass am hinteren Ende bis zum vorderen Ende erstreckt. Dort ist in einem ausgesparten Sitz eine Ventilbuchse aufgenommen. Auch diese verfügt über gleichmäßig voneinander beabstandete Ventilnadelbohrungen, die fluchtend zu den Ventilnadelbohrungen im Düsenkörper liegen. Entsprechend der Anzahl der Ventilnadeln verzweigt sich die Schmelzebohrung, wobei sich die einzelnen Schmelzebohrungen im vorderen Bereich diagonal nach außen erstrecken und jeweils in einer Ventilnadelbohrung der Ventilbuchse münden. Die einzelnen Schmelzebohrungen der Ventilbuchse münden schließlich in Nadeleinsätze welche von einer gemeinsamen am vorderen Ende des Düsenkörpers eingeschraubten Haltebuchse fixiert sind. Diese Haltebuchse fixiert ebenso die Ventilbuchse. Schließlich ist am vorderen Ende des Düsenkörpers eine Düsendichtung vorgesehen, insbesondere an der Haltebuchse. Diese Düsendichtung umfasst alle Nadeleinsätze und damit auch die Verschlussnadeln gemeinsam. Damit aber liegen die Verschlussnadeln in einem gemeinsam hydraulisch verbundenen Raum, was den Nachteil hat, dass die Nadeleinsätze innerhalb der Düsendichtung in einem gemeinsamen Sumpf liegen. Dies führt zu negativen thermischen Einflüssen und unsauberen Angusspunkten. Ein weiterer Nachteil ist die gemeinsame Anordnung und Festlegung der Nadeleinsätze. Hierdurch können thermische und fertigungstechnisch bedingte Toleranzen nicht individuell ausgeglichen werden.

WO 2009/049419 A1 betrifft ebenfalls eine Spritzgießdüse mit mehreren Verschlussnadeln. Sie hat einen außenbeheizten Düsenkörper mit einem hinteren Ende und einem vorderen Ende. Das hintere Ende ist an eine Materialzuführung angeschlossen, während das vordere Ende gegenüber einer Formangussplatte liegt. Wenigstens zwei Verschlussnadeln durchdringen den Düsenkörper vom hinteren Ende zum vorderen Ende, wobei die Bohrungen im Düsenkörper für die Verschlussnadeln gleichzeitig als Schmelzekanal dienen. Am vorderen Ende des Düsenkörpers ist für jede Verschlussnadel eine separate Führungsbuchse vorgesehen. Jede dieser Führungsbuchsen hat eine axial zur jeweils zugehörigen Ventilnadel ausgerichtete Durchgangsöffnung. Letztere dient der Aufnahme der jeweiligen Verschlussnadel und zur Führung der Schmelze. Ferner sitzt jede Führungsbuchse in einer separaten Ausnehmung am vorderen Ende des Düsenkörpers. In dieser Ausnehmung wird jede Führungsbuchse von einer eingeschraubten Haltebuchse gehalten, die eine radiale Dichtfläche aufweist. Diese korrespondiert mit einer Dichtfläche auf der temperierten Werkzeugseite. Auf diese Weise ist die Spritzgießdüse gegenüber jeder einzelnen Angussöffnung abgedichtet. Von Nachteil hierbei ist der relativ große der Platzbedarf der Halteringe. Insbesondere durch die vorgesehene Verschraubung der Halteringe im Düsenkörper müssen diese ausreichend voneinander beabstandet sein. Außerdem ist das Einschrauben der Halteringe aufwendig und kompliziert. Die hohe Anzahl an Bauteilen im vorderen Bereich der Spritzgießdüse macht diese teuer. Außerdem können die Halteringe und deren Dichtungen nicht individuell gegenüber den Kavitäten positioniert werden. Dies führt häufig zu Undichtigkeiten.

Aufgabe der Erfindung ist es daher, diese und weitere Nachteile des Standes der Technik zu beseitigen und eine Spritzgießdüse sowie eine Spritzgießvorrichtung zu schaffen, welche das Anspritzen von sehr eng nebeneinander liegenden Angussöffnungen ermöglicht und mit der gleichzeitig qualitativ hochwertige Anspritzpunkte erzeugbar sind. Zwischen der Spritzgießdüse und der Formangussplatte soll eine stets zuverlässige Abdichtung gewährleistet sein, die zudem thermisch und fertigungstechnisch bedingte Toleranzen ausgleichen kann. Angestrebt wird ferner, dass sowohl die Spritzgießdüse als auch die Spritzgießvorrichtung kostengünstig fertigbar sind.

Hauptmerkmale der Erfindung sind im kennzeichnenden Teil von Anspruch 1 sowie in Anspruch 15 angegeben. Ausgestaltungen sind Gegenstand der Ansprüche 2 bis 14 sowie 16 und 17.

Bei einer Spritzgießdüse für eine Spritzgießvorrichtung zum Verarbeiten eines fließfähigen Materials, Spritzgießdüse für eine Spritzgießvorrichtung zum Verarbeiten eines fließfähigen Materials, mit einem Düsenkörper, der ein hinteres Ende und ein vorderes Ende aufweist, wobei das hintere Ende an eine Materialzuführung und das vordere Ende gegenüber einer Formangussplatte anordenbar ist, mit wenigstens zwei Verschlussnadeln, die den Düsenkörper vom hinteren Ende zum vorderen Ende durchdringen, wobei für jede Verschlussnadel am vorderen Ende des Düsenkörpers eine separate Führungsbuchse angeordnet ist, und wobei jede Führungsbuchse eine axial zur jeweils zugehörigen Verschlussnadel ausgerichtete Durchgangsöffnung zur Aufnahme der jeweiligen Verschlussnadel aufweist, mit einer Schmelzeführung für das fließfähige Material, die vom hinteren Ende zum vorderen Ende des Düsenkörpers führt, wobei die Schmelzeführung jeweils in die Durchgangsöffnungen der Verschlussnadeln mündet, und mit einer Heizvorrichtung, die am Düsenkörper angeordnet ist, sieht die Erfindung vor, dass jede Führungsbuchse eine die Durchgangsöffnung radial umfassende Dichtfläche aufweist, die dichtend zu einer Angussöffnung in der Formangussplatte anordenbar ist.

Besonders vorteilhaft hierbei ist die einteilige Ausführung der Führungsbuchse und der Dichtfläche. Hierdurch ist die Führungsbuchse kostengünstig herstellbar. Außerdem ist jede einzelne Durchgangsöffnung gegenüber der zugehörigen Angussöffnung abgedichtet. Dies verhindert ein Verteigen/Verklumpen der Schmelze im Anspritzbereich, wie es im Stand der Technik durch einen gemeinsamen Sumpf um die Angussöffnungen auftritt. Vielmehr ist erfindungsgemäß um jede Führungsbuchse ein Isolationsspalt ausbildbar, wodurch thermische Verluste gering sind und eine konstante Kunststoffschmelzetemperatur innerhalb der Führungsbuchsen vorliegt. Zwischen den einzelnen Führungsbuchsen wird so außerdem sehr wenig Platz benötigt. Entsprechend ist der Abstand einzelner Angussöffnungen minimal auslegbar. Durch die separate Abdichtung einer jeden Führungsbuchse können besonders hochwertige Anspritzpunkte erzeugt werden.

Jede Verschlussnadel sollte axial verschiebbar zwischen einer Geschlossenstellung und einer Offenstellung gelagert sein. Somit können die Verschlussnadeln die einzelnen Durchgangsöffnungen freigeben. Je nach Anforderung können die Verschlussnadeln entweder einen gemeinsamen Antrieb aufweisen, der auf der Seite des hinteren Endes des Düsenkörpers angeordnet ist, oder aber die Verschlussnadeln haben jeweils einen eigenen Antrieb, der ebenfalls auf der Seite des hinteren Endes des Düsenkörpers angeordnet ist. Ein gemeinsamer Antrieb bietet sich insbesondere bei gleich großen Kavitäten oder aber einer gemeinsamen Kavität hinter den Angussöffnungen an. Sofern unterschiedliche Öffnungszeiten der Verschlussnadeln nötig sind, kommen bevorzugt separate Antriebe für die Verschlussnadeln in Betracht.

Besonders bevorzugt sind die Verschlussnadeln parallel zueinander angeordnet. Alternativ kann jedoch auch eine radiale d.h. sternförmige Anordnung vorgesehen werden.

Eine Weiterbildung der Erfindung sieht vor, dass jede Führungsbuchse in jeweils eine separate Öffnung am vorderen Ende des Düsenkörpers eingesetzt ist. Hierdurch werden Undichtigkeiten zwischen den einzelnen Führungsbuchsen vermieden. Insbesondere kann die Passung zwischen der Führungsbuchse und der zugeordneten separaten Öffnung jeweils einzeln bearbeitet werden. Gemäß einer näheren Ausgestaltung ist eine jede Führungsbuchse in die jeweilige Öffnung am vorderen Ende des Düsenkörpers eingesteckt. Somit ist es nicht erforderlich, die Führungsbuchse einzuschrauben. Hierdurch können die Führungsbuchsen besonders eng aneinander angeordnet werden.

Insbesondere eine Auslegung derart, dass jede Führungsbuchse in der jeweiligen Öffnung am vorderen Ende des Düsenkörpers axial teleskopierbar gelagert ist, bringt weitere Vorteile. Diese betreffen insbesondere die Abdichtung zwischen der Führungsbuchse und der Angussöffnung. Durch die teleskopierbare Verbindung ist es möglich, thermische Ausdehnungen auszugleichen, vor allem diejenigen des Düsenkörpers, der Angussplatte und bspw. eines Verteilers. Jede einzelne Führungsbuchse kann axial relativ zur Angussöffnung verschoben werden. Undichtigkeiten zwischen der Führungsbuchse und der Angussöffnung werden so vermieden.

Bevorzugt ist die teleskopische Lagerung dabei jeweils als Gleitdichtung ausgebildet. Somit wird ein Austritt von Kunststoffschmelze zwischen der jeweiligen Öffnung am vorderen Ende des Düsenkörpers und der Führungsbuchse vermieden. Eine solche Gleitdichtung kann durch wenigstens eine radiale Vertiefung unterbrochen sein. Dabei sollte die Vertiefung in der radialen Außenfläche der Führungsbuchse ausgebildet sein, da dies leichter fertigbar ist als radiale Vertiefungen in der radialen Innenfläche der Öffnung des Düsenkörpers. Die radialen Vertiefungen verbessern die Abdichtung der Gleitdichtung. Außerdem wird die Reibung zwischen der Führungsbuchse und der umgebenden Öffnung verringert. Die Führungsbuchse lässt sich so einfacher in der jeweiligen Öffnung teleskopieren.

Um thermisch bedingte Abstandsschwankungen zwischen der Werkzeugseite und der Maschinenseite ausgleichen zu können, kann zwischen jeder Führungsbuchse und dem Düsenkörper ein Kraftspeicher angeordnet sein, der die Führungsbuchse vom hinteren Ende des Düsenkörpers weggerichtet kraftbeaufschlagt. Somit weist eine jede Führungsbuchse eine allgemein feste Position gegenüber der jeweiligen Angussöffnung auf. Auch bei ungleichmäßigen Ausdehnungen wird die Dichtung zwischen der Führungsbuchse und der Angussöffnung stets gewährleistet. Um keinerlei Verschiebung zwischen der Angussöffnung und der Austrittsöffnung der Führungsbuchse zuzulassen, sollte die Dichtfläche einer jeden Führungsbuchse am Boden der jeweils zugeordneten Angussöffnung angeordnet sein.

Der Materialfluss durch die Führungsbuchse gelingt besonders vorteilhaft, wenn die Durchgangsöffnung einer jeden Führungsbuchse zwischen der Mündung ihres Zuführungskanals und ihrer Verschlussdichtfläche eine Kanalaufweitung mit größerem Durchmesser als die zugehörige Verschlussnadel aufweist. Zusätzlich sollte an jede Führungsbuchse in der Durchgangsöffnung bis in den Bereich des Materialaustritts ragende und axial ausgerichtete Führungsstege zur Führung der zugehörigen Verschlussnadel aufweisen. Damit ist eine angussnahe und exakte Führung der Nadel möglich. Die Güte der Anspritzpunkte ist so besonders hoch.

Alternativ oder ergänzend zur Anordnung eines Kraftspeichers zwischen dem Düsenkörper und einer jeden Führungsbuchse ist es möglich, eine jede Führungsbuchse mit einem Niederhalter in Richtung der Formangussplatte Kraft zu beaufschlagen. Ein solcher Niederhalter wird an der Werkzeugseite fixiert, d.h. an der Formangussplatte. Damit weisen auch die Führungsbuchsen eine im Allgemeinen feste Position gegenüber der Angussöffnung auf. Je nach verfügbarem Bauraum kann dabei ein Niederhalter pro Führungsbuchse vorgesehen werden oder aber ein Niederhalter fixiert mehrere Führungsbuchsen. Zur Vereinfachung der Montage haben die Führungsbuchsen und/oder die Öffnungen am vorderen Ende des Düsenkörpers vorzugsweise Einführschrägen. Alternativ kann der Niederhalter auch am Düsenkörper fixiert sein und die Führungsbuchsen in ihren Öffnungen halten. Letzteres kann durch eine Kraftbeaufschlagung oder mit Spiel für einen thermischen Längenausgleich erfolgen. Eine Vormontage der Führungsbuchsen an der Formangussplatte ist dann nicht notwendig.

Eine bevorzugte Ausführungsform der Erfindung sieht vor, dass sich die Schmelzeführung im Bereich der Führungsbuchsen verzweigt. Somit besteht im Bereich des hinteren Endes ein Hauptschmelzekanal im Düsenkörper, der die Schmelzeführung ausbildet. Erst im Bereich der Führungsbuchsen teilt sich der Hauptschmelzekanal auf. Somit erreicht eine homogene und gleichmäßige temperierte Kunststoffmasse die Führungsbuchsen. Den Angussöffnungen kann somit Kunststoff gleicher Qualität zugeführt werden. Außerdem ist hierdurch die Verweilzeit der Kunststoffmasse im Heißkanalsystem gering. Bei einer hohen Anzahl an Verschlussnadeln können auch mehrere Hauptschmelzekanäle vorgesehen werden, um die Verteilung zu vereinfachen. Grundsätzlich kann auch einer bestimmten Ventilnadel ein eigener Hauptschmelzekanal zugeordnet sein. Hierdurch können beispielsweise unterschiedliche Einspritzdrücke an unterschiedlichen Ventilnadeln vorgesehen werden oder aber es werden gar unterschiedliche Schmelzen verarbeitet, wie bspw. bei einem Mehrkomponenten-Spritzgießen.

Eine Fortbildung der Führungsbuchse sieht vor, dass jede Führungsbuchse einen nicht parallel zur Durchgangsöffnung verlaufenden Zuführungskanal aufweist, der in die Durchgangsöffnung mündet und mit der Schmelzeführung strömungsverbunden ist. Ein solcher schräg verlaufender Zuführungskanal kann radial in die Durchgangsöffnung der Führungsbuchse münden. Auf diese Weise lassen sich verschleißanfällige Dichtungen und Führungen für die Verschlussnadeln in der Führungsbuchse positionieren. Die Führungsbuchsen sind einfach austauschbar und die Wartung der Spritzgießdüse ist besonders einfach. Somit ist gerade im Anspritzbereich der Angussöffnung ein gleichbleibender Schmelzekanal gegeben. Außerdem ist die thermische Trennung der Spritzgießdüse zur Formangussplatte optimal.

Gemäß einer Fortbildung der Erfindung ist in der Durchgangsöffnung einer jeden Führungsbuchse zwischen der Mündung des Zuführungskanals und dem hinteren Ende des Düsenkörpers eine Gleitdichtung ausgebildet, in der die jeweilige Verschlussnadel axialverschiebbar gelagert ist. Somit kann der in der Kunststoffschmelze liegende Bereich der Verschlussnadel auf einen Bereich innerhalb der Führungsbuchse reduziert werden. Entsprechend leichtgängig kann die Verschlussnadel bewegt werden. Außerdem kann die Dichtung einfach durch Austausch der Führungsbuchse ersetzt werden.

Zur Verbesserung der Dichtwirkung und Verringerung der Reibung zwischen der Verschlussnadel und der Führungsbuchse kann eine jede Gleitdichtung in axialer Richtung der zugehörigen Verschlussnadel von wenigstens einem Erweiterungsabschnitt unterbrochen sein, dessen Durchmesser jeweils größer ist als derjenige der Gleitdichtung.

Fertigungstechnisch zu bevorzugen ist dabei eine Ausbildung, bei der jede Gleitdichtung einen zylindrischen Umfang aufweist, der koaxial zur zugeordneten Verschlussnadel ausgerichtet ist. Auch die Verschlussnadel sollte einen zylindrischen Umfang aufweisen.

Zur Abdichtung der Spritzgießdüse in deren Geschlossenstellung sollte in der Durchgangsöffnung einer jeden Führungsbuchse zwischen der Mündung des Zuführungskanals und der vom hinteren Ende des Düsenkörpers abgewandten Seite der Durchgangsöffnung eine Verschlussdichtfläche ausgebildet sein, die in einer Geschlossenstellung einer zugeordneten Verschlussnadel mit dieser eine Dichtung ausbildet. Sowohl die Verschlussdichtfläche als auch die korrespondierte Fläche an der Verschlussnadel sollten hierbei kegelförmig ausgebildet sein.

Als besonders vorteilhaft erweist sich eine Ausführungsform der Führungsbuchse derart, dass der Durchmesser der Durchgangsöffnung einer jeden Führungsbuchse zwischen der Mündung des Zuführungskanals und der Verschlussdichtfläche größer ist als der Durchmesser der jeweiligen Verschlussnadel. Von der Maschine bereitgestellte Kunststoffschmelze kann so in der Geschlossenstellung bis in den Bereich der Verschlussdichtfläche gelangen. Die Distanz zu der Angussöffnung ist so minimal. Entsprechend gering ist die Zeitverzögerung, mit der Schmelze in die Angussöffnung einströmt, wenn die Nadel von der Geschlossenstellung in eine Offenstellung verschoben wird. Um eine exakte Führung der Verschlussnadel auch im Bereich der Verschlussdichtfläche zu erreichen, sollte eine jede Führungsbuchse bis in den Bereich der Verschlussdichtfläche ragende und axial ausgerichtete Führungsstege zur Führung der jeweiligen Verschlussnadeln aufweisen, d.h. insbesondere in der Durchgangsöffnung. Damit ist die Verschlussnadel angussnah und exakt geführt. Ein Verschleiß der Verschlussnadel ist so minimal. Zwischen den Führungsstegen und der Verschlussnadel bestehen dennoch axial ausgerichtete Hohlräume. Diese dienen als Rückstromkanäle. Beim Verschieben der Verschlussnadel von einer Offenstellung in eine Geschlossenstellung kann das von der Verschlussnadel verdrängte Material durch diese Rückstromkanäle zurückströmen. Der Druck innerhalb der Kavität steigt somit nicht in Abhängigkeit der Verschiebung der Verschlussnadel an. Der Druck innerhalb der Kavität ist so genau einstellbar. Außerdem können die Aktuatoren zur Betätigung der Verschlussnadel kleiner ausgelegt sein.

Ferner sieht eine Ausführung der Erfindung vor, dass der Zuführkanal einer jeden Führungsbuchse relativ zur Durchgangsöffnung radial aus der jeweiligen Führungsbuchse austritt. Die Durchgangsöffnungen im Düsenkörper werden so nicht von Kunststoff gefüllt. Die Verschlussnadeln sind so besonders leichtgängig verschiebbar. So ist es möglich, die Schmelzeführung als einen einzigen unverzweigten Schmelzekanal vom hinteren Ende des Düsenkörpers bis in den Bereich der Führungsbuchsen auszulegen. Erst in unmittelbarer Umgebung der Führungsbuchse kann dieser Schmelzekanal aufgeteilt und mit dem Zuführungskanal einer jeden Führungsbuchse strömungsverbunden sein. Die Qualität der Kunststoffschmelze ist so in jeder Führungsbuchse gleichermaßen gewährleistet.

Der Abstand zwischen zwei Angussöffnungen kann dadurch auf ein Minimum reduziert werden, dass die Durchgangsöffnung und der Zuführkanal einer jeden Führungsbuchse in jeweils einer gemeinsamen Ebene liegen, wobei die Dicke der Führungsbuchse senkrecht zur Ebene dem Durchmesser der Durchgangsöffnung und/oder des Zuführungskanals zuzüglich einer minimal notwendigen Wandstärke entspricht. In der Richtung senkrecht zu dieser Ebene können die Führungsbuchsen so besonders eng aneinander angeordnet werden. Die minimale Wandstärke ergibt sich insbesondere aus der notwendigen Wandstärke zur Druckaufnahme der Spritzgießdrücke.

Um stets einen Materialfluss von der Schmelzeführung in die Zuführkanäle der Führungsbuchsen zu ermöglichen, sollten die Führungsbuchsen verdrehgesichert angeordnet sein. Somit wird die Zuführung von Kunststoffschmelze in den Zuführungskanal der Führungsbuchse sichergestellt. Damit die Öffnung zwischen dem Düsenkörper und der Führungsbuchse bei axialen Verschiebungen der Führungsbuchse nicht verjüngt wird, kann eine Aufweitung des Zuführungskanals auf Seite der Führungsbuchse oder aber auf Seiten der Schmelzeführung im Düsenkörper vorgesehen sein. Die Aufweitung erstreckt sich dann insbesondere in axialer Richtung. Bei einer teleskopischen Verschiebung der Führungsbuchse innerhalb des Düsenkörpers bleibt der Durchtrittsquerschnitt so hinreichend groß.

Ein minimaler Abstand zwischen den Angussöffnungen ist dadurch erzielbar, dass die Führungsbuchsen benachbart und sich berührend angeordnet sind.

Bevorzugt weist jede Führungsbuchse in ihrem vorderen Bereich einen radial nach außen weisenden Flansch auf. Mit diesem kann sich die Führungsbuchse axial an dem Düsenkörper und/oder an der die Angussöffnung umgebenden Formangussplatte abstützen.

Damit auch trotz des Flansches ein minimaler Abstand zwischen den Angussöffnungen realisierbar ist, sollte der Flansch gegenüberliegende abgeflachte Seitenflächen aufweisen. Diese können in einer Ebene parallel zur axialen Ausrichtung zur zugehörigen Verschlussnadel liegen. Idealerweise berühren sich die Führungsbuchsen an den abgeflachten Seiten dieses Flansches. Die abgeflachten Seiten des Flansches sollten den minimal notwendigen Durchmesser der Führungsbuchse tangieren. Somit steht der Flansch in Richtung der benachbarten Führungsbuchse nicht über den minimalen Durchmesser hinaus. Außerdem bilden zwei aneinander liegende abgeflachte Seiten zweier Führungshülsen eine Verdrehsicherung für die Führungshülsen aus. Dies ist besonders wichtig, wenn die Kunststoffmasse durch einen seitlichen Zuführkanal durch die Wandung der Führungshülse in deren Durchgangsöffnung mündet.

Weiterhin kann der Flansch einer Führungsbuchse von einem Niederhalter hintergriffen werden, der an der Formangussplatte befestigt ist. Entsprechend wird die Führungsbuchse relativ zur Formangussplatte fixiert.

Zur Zuführung von Kunststoffschmelze von einer zentralen Maschinendüse oder einem Verteiler kann die Schmelzeführung am hinteren Ende des Düsenkörpers eine axial ausgerichtete Speisungsöffnung aufweisen. Alternativ kann die Schmelzeführung am hinteren Ende eine radial am Umfang des Düsenkörpers ausgerichtete Speisungsöffnung aufweisen.

Weiterhin betrifft die Erfindung eine Spritzgießvorrichtung mit einer Spritzgießdüse zum Verarbeiten eines fließfähigen Materials, mit einem Düsenkörper, der ein hinteres Ende und ein vorderes Ende aufweist, wobei das hintere Ende an eine Materialzuführung und das vordere Ende gegenüber einer Formangussplatte anordenbar ist, wobei wenigstens zwei Verschlussnadeln den Düsenkörper vom hinteren Ende zum vorderen Ende durchdringen, wobei eine Schmelzeführung vom hinteren Ende zum vorderen Ende des Düsenkörpers führt, wobei eine Heizvorrichtung am Düsenkörper angeordnet ist, wobei für jede Verschlussnadel eine separate Führungsbuchse am vorderen Ende des Düsenkörpers angeordnet ist, wobei jede Führungsbuchse eine axial zur jeweils zugehörigen Ventilnadel ausgerichtete Durchgangsöffnung zur Aufnahme der jeweiligen Verschlussnadel aufweist, wobei die Schmelzeführung in die Durchgangsöffnung mündet, und wobei eine jede Führungsbuchse eine die Durchgangsöffnung radial umfassende Dichtfläche aufweist, die dichtend zu einer Angussöffnung in der Formangussplatte anordenbar ist, wobei das hintere Ende des Düsenkörpers an der Materialzuführung angeordnet ist, wobei das vordere Ende des Düsenkörpers gegenüber der Formangussplatte angeordnet ist, und wobei eine jede Führungsbuchse mit ihrer Dichtfläche jeweils dichtend in einer separaten Angussöffnung angeordnet ist.

Somit wird eine Spritzgießvorrichtung bereitgestellt, welche das Anspritzen von eng aneinander liegenden Angussöffnungen erlaubt. Mit dieser sind qualitativ hochwertige Anspritzpunkte erzeugbar. Dabei liegt eine stets zuverlässige Dichtung zwischen der Spritzgießdüse und der Formangussplatte vor. Zusätzlich können erfindungsgemäß thermisch und fertigungstechnisch bedingte Toleranzen durch die Spritzgießdüse ausgeglichen werden. Die verringerte Anzahl an Bauteilen im vorderen Bereich der Spritzdüse reduziert die Fertigungskosten der Spritzgießvorrichtung. Um eine hohe Anzahl an Anspritzpunkten anspritzen zu können, kann entweder die Anzahl der Führungsbuchsen erhöht werden, alternativ ist die Materialzuführung jedoch ein Verteiler. Mittels des Verteilers können mehrere Spritzgießdüsen an einer Maschinenseite angeordnet und mit Kunststoffschmelze versorgt werden.

Gemäß einer Ausgestaltung des Verteilers wird dieser von einer Verteilerplatte ausgebildet. Der Düsenkörper der Spritzgießdüse kann an diesem Verteiler festgelegt sein. Zu bevorzugen ist jedoch eine radial schwimmende Lagerung des Düsenkörpers am Verteiler. Mittels des Verteilers ist es möglich, dass die Spritzgießvorrichtung wenigstens eine zweite Spritzgießdüse aufweist.

In einer weiteren Variante der Spritzgießvorrichtung weist jede Führungsbuchse in ihrem vorderen Bereich einen radial nach außen weisenden Flansch auf, und die Führungsbuchse ist von einem den Flansch hintergreifenden Niederhalter an der Formangussplatte festgelegt. Somit hat die Führungshülse eine im Wesentlichen feste Position gegenüber der Angussöffnung in der Formangussplatte. Thermische Ausdehnungen der Spritzgießdüse oder der -vorrichtung können so ausgeglichen werden, ohne dass Undichtigkeiten im Bereich der Dichtfläche der Führungsbuchse entstehen. Zur Montage können dann zunächst die Führungsbuchsen mit dem Niederhalter an der Formangussplatte festgelegt und anschließend der Düsenkörper aufgesteckt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine dreidimensionale Ansicht einer Spritzgießvorrichtung mit einer Spritzgießdüse;
- Fig. 2: einen dreidimensionalen Längsschnitt durch den vorderen Bereich einer Spritzgießdüse;
- Fig. 3: einen Längsschnitt durch den vorderen Bereich einer Spritzgießdüse;
- Fig. 4: einen dreidimensionalen Längsschnitt durch eine Führungsbuchse und eine Verschlussnadel;
- Fig. 5: einen Längsschnitt durch einen vorderen Bereich einer Spritzgießdüse und einer Formangussplatte; und
- Fig. 6: einen dreidimensionalen Längsschnitt durch das hintere Ende einer Spritzgießdüse.

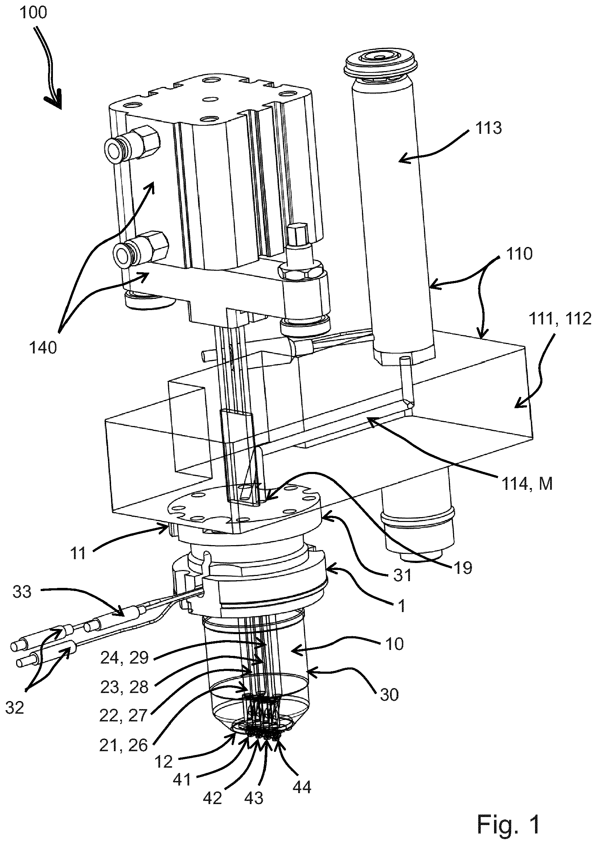

Fig. 1 zeigt eine Spritzgießvorrichtung 100 mit einer Spritzgießdüse 1 in einer dreidimensionalen Ansicht. Diese dient der Verarbeitung eines fließfähigen Materials M. Die Spritzgießdüse 1 weist einen Düsenkörper 10 auf, der ein hinteres Ende 11 und ein vorderes Ende 12 hat. Das hintere Ende 11 ist an einer Materialzuführung 110 angeordnet und das vordere Ende 12 gegenüber einer Formangussplatte anordenbar. Vier Verschlussnadeln 21,22,23,24 durchdringen den Düsenkörper 10 vom hinteren Ende 11 zum vorderen Ende 12. Verdeckt von den Verschlussnadeln 21,22,23,24, ist eine Schmelzeführung 13, die vom hinteren Ende 11 zum vorderen Ende 12 des Düsenkörpers 10 führt.

Am Düsenkörper 10 ist eine Heizvorrichtung 30 angeordnet. Insbesondere umgibt diese den Düsenkörper 10 radial. Die Heizvorrichtung 30 ist mittels eines elektrischen Heizungsanschlusses 32 anschließbar. Außerdem ist ein elektrischer Thermofühler mit einem elektrischen Thermofühleranschluss 33 vorgesehen.

Für jede Verschlussnadel 21,22,23,24 ist eine separate Führungsbuchse 41,42,43,44 am vorderen Ende 12 des Düsenkörpers 10 angeordnet. Jede dieser Führungsbuchsen 41,42,43,44 hat eine axial zur jeweils zugehörigen Ventilnadel 21,22,23,24 ausgerichtete Durchgangsöffnung 51,52,53,54 zur Aufnahme der jeweiligen Verschlussnadel 21,22,23,24. Die von den Verschlussnadeln 21,22,23,24 verdeckte Schmelzeführung 13 mündet in die Durchgangsöffnungen der Führungsbuchsen 41,42,43,44.

Am hinteren Ende 11 ist der Düsenkörper 10 mit einem Düsenkopf 31 an einer Verteilerplatte 112 eines Verteilers 111 fixiert. Innerhalb der Verteilerplatte 112 führt ein Verteilerkanal 114 zu einer Speisungsöffnung 19 des Schmelzekanals 18 der Spritzgießdüse 1. Dieser Verteilerkanal 114 ist über eine Anschlussdüse 113 mit einer zentralen Maschinendüse strömungsverbunden.

Ferner durchragen die Verschlussnadeln 21,22,23,24 die Verteilerplatte 112 am hinteren Ende 11 der Spritzgießdüse 1. Auf der dem Düsenkopf 31 gegenüberliegenden Seite der Verteilerplatte 112 sind die Verschlussnadeln 21,22,23,24 mit einem Antrieb 140 verbunden. Dieser Antrieb 140 liegt linear hinter den Verschlussnadeln 21,22,23,24. Dabei handelt es sich um einen gemeinsamen Antrieb 140 für die Verschlussnadeln 21,22,23,24. Die Verschlussnadeln 21,22,23,24 sind parallel zueinander angeordnet und axial verschiebbar zwischen einer Geschlossenstellung und einer Offenstellung gelagert.

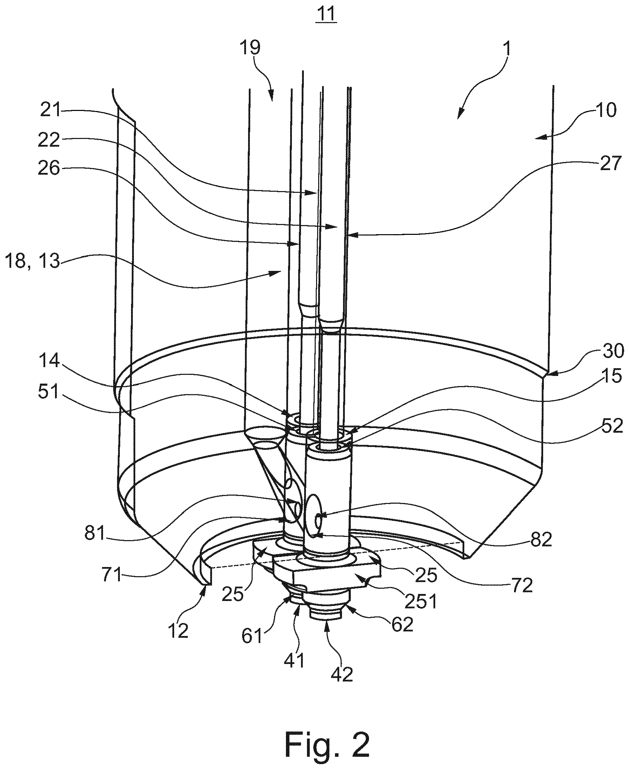

In Fig. 2 erkennt man einen dreidimensionalen Längsschnitt durch das vordere Ende 12 einer Spritzgießdüse 1. Die Spritzgießdüse 1 weist einen Düsenkörper 10 auf, der sich von einem hinteren Ende 11 bis zum vorderen Ende 12 erstreckt. Das vordere Ende 12 ist gegenüber einer Formangussplatte anordenbar. Wie weiterhin erkennbar ist, durchdringen zwei Verschlussnadeln 21, 22 den Düsenkörper 10 vom hinteren Ende 11 zum vorderen Ende 12. Außerdem führt eine Schmelzeführung 13 vom hinteren Ende 11 zum vorderen Ende 12.

Am Düsenkörper 10 ist eine Heizvorrichtung 30 angeordnet. Letztere umgibt den Düsenkörper 10 radial. Insbesondere ist die Heizvorrichtung 30 eine Dünnschichtheizung. Am vorderen Ende 12 des Düsenkörpers 10 ist für jede Verschlussnadel 21,22 eine separate Führungsbuchse 41,42 angeordnet. Jede Führungsbuchse 41,42 weist eine axial zur jeweils zugehörigen Ventilnadel 21,22 ausgerichtete Durchgangsöffnung 51,52 auf. Die Schmelzeführung 13 mündet in die Durchgangsöffnung 51,52 der Führungsbuchsen 41,42. Jede der Führungsbuchsen 41,42 hat eine die Durchgangsöffnung 51,52 radial umfassende Dichtfläche 61,62. Diese ist dichtend zu einer Angussöffnung in einer Formangussplatte anordenbar.

Die Verschlussnadeln 21,22 sind parallel zueinander angeordnet und jeweils axial verschiebbar zwischen einer Geschlossenstellung und einer Offenstellung gelagert. Die Lagerung erfolgt am vorderen Ende 12 insbesondere durch die Führungsbuchsen 41,42, die jeweils in eine separate Öffnung 14, 15 am vorderen Ende 12 des Düsenkörpers 10 eingesetzt sind. Insbesondere ist eine jede Führungsbuchse 41,42 in die jeweilige Öffnung 14,15 am vorderen Ende 12 des Düsenkörpers 10 eingesteckt. Außerdem ist eine jede Führungsbuchse 41,42 in der jeweiligen Öffnung 14,15 axial teleskopierbar gelagert. Diese teleskopische Lagerung ist jeweils als Gleitdichtung ausgebildet. Durch die Teleskopierbarkeit der Führungsbuchsen 41,42 haben diese eine im Allgemeinen feste Position gegenüber der jeweiligen Angussöffnung.

Die Schmelzeführung 13 umfasst einen Schmelzekanal 18. Im Bereich der Führungsbuchsen 41,42 verzweigt sich die Schmelzeführung 13. Jede Führungsbuchse 41,42 weist eine nicht parallel zur Durchgangsöffnung 51,52 verlaufenden Zuführungskanal 71,72 auf. Dieser mündet in die Durchgangsöffnung 51,52 der Führungsbuchse 41,42 und ist mit der Schmelzeführung 13 strömungsverbunden. Der Zuführungskanal 71,72 einer jeden Führungsbuchse 41,42 tritt somit relativ zur Durchgangsöffnung 51,52 radial aus der jeweiligen Führungsbuchse 41,42 aus.

Die Durchgangsöffnung 51,52 und der Zuführkanal 71,72 einer jeden Führungsbuchse liegen jeweils in einer gemeinsamen Ebene. Die Dicke der Führungsbuchse 41,42 senkrecht zur Ebene entspricht dem Durchmesser der Durchgangsöffnung 51,52 zuzüglich einer minimal notwendigen Wandstärke.

Ferner weist jede Führungsbuchse 41,42 einen radial nach außen weisenden Flansch 25 auf. Dieser Flansch 25 hat jeweils eine abgeflachte Seite. Diese liegt in einer Ebene parallel zur axialen Ausrichtung der zugehörigen Verschlussnadel 21,22. Die Führungsbuchsen 41,42 berühren sich an den abgeflachten Seiten des Flansches 25. Hierdurch sind die Führungsbuchsen 41,42 verdrehgesichert.

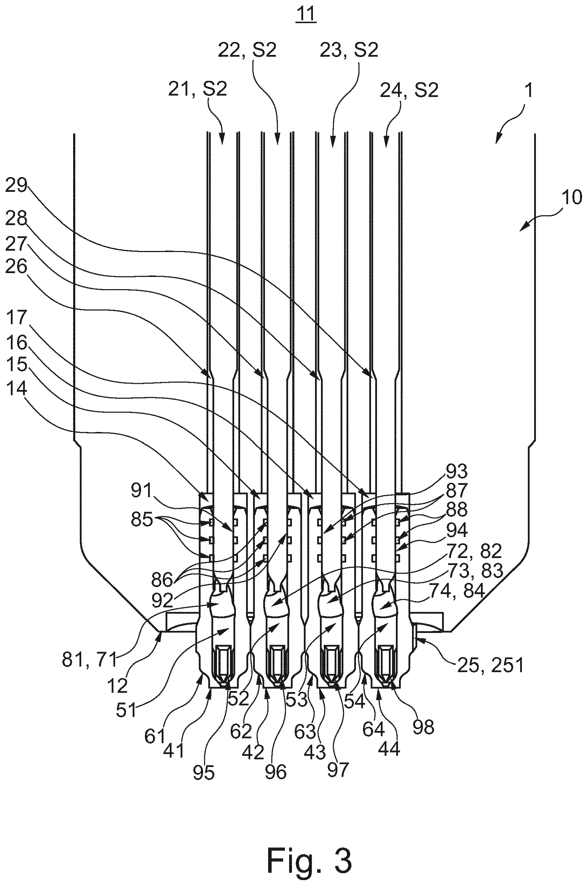

In Fig. 3 findet sich ein Längsschnitt durch das vordere Ende 12 einer Spritzgießdüse 1. Die Spritzgießdüse 1 hat einen Düsenkörper 10, der sich von einem hinteren Ende 11 zu einem vorderen Ende 12 erstreckt. Das hintere Ende 11 ist an einer Materialzuführung und das vordere Ende 12 gegenüber einer Formangussplatte anordenbar. Vier Verschlussnadeln 21,22,23,24 durchdringen den Düsenkörper 10 vom hinteren Ende 11 zum vorderen Ende 12. Hierfür sind im Düsenkörper 10 Durchgangsbohrungen 26,27,28,29 vorgesehen. Nicht sichtbar ist in dieser Ansicht eine Schmelzeführung vom hinteren Ende 11 zum vorderen Ende 12 des Düsenkörpers 10. Ferner ist der Düsenkörper 10 radial von einer Heizvorrichtung 30 umgeben.

Am vorderen Ende 12 des Düsenkörpers 10 ist für jede Verschlussnadel 21,22,23,24 eine separate Führungsbuchse 41,42,43,44 angeordnet. Jede dieser Führungsbuchsen 41,42,43,44 hat eine axial zur jeweils zugehörigen Ventilnadel 21,22,23,24 ausgerichtete Durchgangsöffnung 51,52,53,54 zur Aufnahme der jeweiligen Verschlussnadel 21,22,23,24. Die nicht sichtbare Schmelzeführung mündet in diese Durchgangsöffnungen 51,52,53,54. Weiterhin weist eine jede Führungsbuchse 41,42,43,44 eine die Durchgangsöffnung 51,52,53,54 radial umfassende Dichtfläche 61,62,63,64 auf. Diese ist dichtend zu einer Angussöffnung in der Formangussplatte anordenbar. Sowohl die Verschlussnadeln 21,22,23,24 als auch die Durchgangsbohrungen 26,27,28,29 und die Durchgangsöffnung 51,52,53,54 der Führungsbuchsen 41,42,43,44 sind parallel zueinander ausgerichtet. Die Verschlussnadeln 21,22,23,24 sind axial verschiebbar zwischen einer Geschlossenstellung und der gezeigten Offenstellung S2 gelagert. Insbesondere erfolgt die Lagerung mittels der Führungsbuchsen 41,42,43,44, die jeweils in einer separaten Öffnung 14,15,16,17 am vorderen Ende 12 des Düsenkörpers 10 eingesetzt sind. Das Einsetzten erfolgt insbesondere durch ein Einstecken. Hierdurch ist eine jede Führungsbuchse 41,42,43,44 in der jeweiligen Öffnung 14,15,16,17 am vorderen Ende 12 des Düsenkörpers 10 axial teleskopierbar gelagert. Die teleskopischen Lagerungen sind jeweils als Gleitdichtung ausgebildet. Durch die teleskopische Verbindung kann eine jede Führungsbuchse 41,42,43,44 eine im Allgemeinen feste Position gegenüber der jeweiligen Angussöffnung einnehmen.

Jede Führungsbuchse 41,42,43,44 weist eine nicht parallel zu Durchgangsöffnung 51,52,53,54 verlaufenden Zuführungskanal 71,72,73,74 auf. Dieser mündet in die jeweilige Durchgangsöffnung 51,52,53,54 und ist mit der Schmelzeführung strömungsverbunden. In der Durchgangsöffnung 51,52,53,54 einer jeden Führungsbuchse 41,42,43,44 ist zwischen der Mündung 81,82,83,84 des Zuführungskanals 71,72,73,74 und dem hinteren Ende 11 des Düsenkörpers 10 eine Gleitdichtung 91,92,93,94 ausgebildet, in der die jeweilige Verschlussnadel 21,22,23,24 axial verschiebbar gelagert ist. Die jeweiligen Gleitdichtungen 91,92,93,94 sind in axialer Richtung der zugehörigen Verschlussnadel 21,22,23,24 von Erweiterungsabschnitten 85,86,87,88 unterbrochen. Deren Durchmesser ist jeweils größer als derjenige der Gleitdichtung 91,92,93,94. Weiterhin hat eine jede Gleitdichtung 91,92,93,94 einen zylindrischen Umfang, der koaxial zur zugehörigen Verschlussnadel 21,22,23,24 ausgerichtet ist.

Innerhalb der Durchgangsöffnung 51,52,53,54 einer jeden Führungsbuchse 41,42,43,44 findet sich zwischen der Mündung 81,82,83,84 des Zuführungskanals 71,72,73,74 und der vom hinteren Ende 12 des Düsenkörpers 10 abgewandten Seite der Durchgangsöffnung 51,52,53,54 eine Verschlussdichtfläche 95,96,97,98. Diese bildet in einer Geschlossenstellung der zugeordneten Verschlussnadel 21,22,23,24 mit dieser eine Dichtung aus. Eine jede Verschlussdichtfläche 95,96,97,98 umfasst hierfür die jeweils in der Geschlossenstellung aufgenommene Verschlussnadel 21,22,23,24. Insbesondere sind die Verschlussdichtflächen 95,96,97,98 hierfür kegelförmig ausgebildet. D.h., sie sind in Richtung des hinteren Endes 11 des Düsenkörpers 10 konisch aufweitend ausgebildet.

Wie man weiterhin erkennt, ist der Durchmesser der Durchgangsöffnung 51,52,53,54 einer jeden Führungsbuchse 41,42,43,44 zwischen der Mündung 75,76,77,78 des Zuführungskanals 71,72,73,74 und der Verschlussdichtfläche 95,96,97,98 größer als der Durchmesser der jeweiligen Verschlussnadel 21,22,23,24.

Eine besonders enge Anordnung der Führungsbuchsen 41,42,43,44 wird dadurch erreicht, dass die Durchgangsöffnung 51,52,53,54 und der Zuführkanal 71,72,73,74 einer jeden Führungsbuchse 41,42,43,44 in jeweils einer gemeinsamen Ebene liegen. Eine Dicke B der Führungsbuchse 41,42,43,44 senkrecht zur Ebene entspricht dabei dem Durchmesser der Durchgangsöffnung 51,52,53,54 zuzüglich einer minimalen notwendigen Wandstärke, zuzüglich der Hälfte des Abstandes zwischen den benachbarten Öffnungen 14,15,16,17 am vorderen Ende 12 des Düsenkörpers 10.

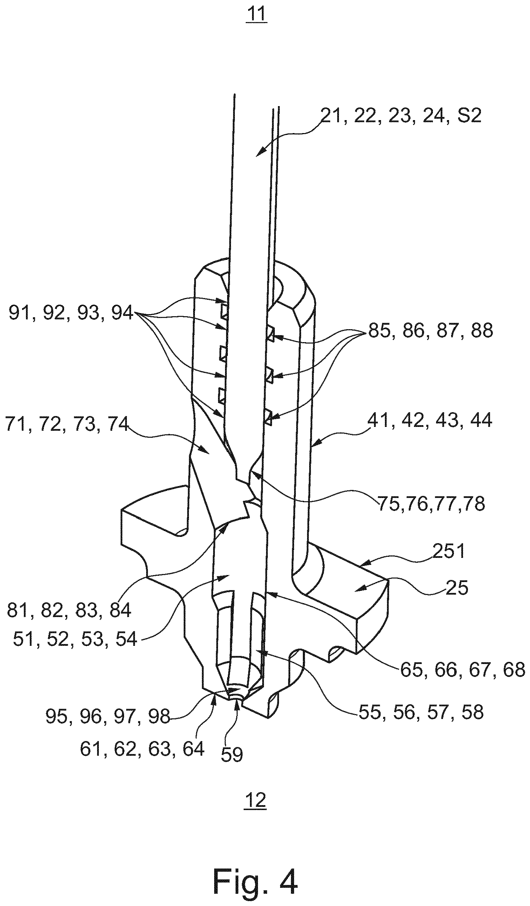

Fig. 4 zeigt eine dreidimensionale Darstellung eines Längsschnitts durch eine Führungsbuchse 41,42,43,44 und eine Verschlussnadel 21,22,23,24, welche sich in einer Offenstellung S2 befindet. Die Darstellung kann auf mehrere Führungsbuchsen 41, 42,43,44 einer Spritzgießdüse zutreffen, weswegen diese mit Bezugszeichen von mehreren Führungsbuchsen 41, 42,43,44 versehen wurde.

Angedeutet ist dabei die vorgesehene Lage innerhalb eines Düsenkörpers, wobei sich die Verschlussnadel 21,22,23,24 von einem hinteren Ende 11 zu einem vorderen Ende 12 erstreckt. Die Führungsbuchse 41,42,43,44 weist eine axial zur dazugehörigen Verschlussnadel 21,22,23,24 ausgerichtete Durchgangsöffnung 51,52,53,54 zur Aufnahme von dieser auf. Außerdem hat die Führungsbuchse 41,42,43,44 eine die Durchgangsöffnung 51,52,53,54 radial umfassende Dichtfläche 61,62,63,64. Insbesondere ist diese am vorderen Ende 12 der Führungsbuchse 41,42,43,44 angeordnet. Damit ist die Führungsbuchse 41,42,43,44 dichtend zu einer Angussöffnung in einer Formangussplatte anordenbar.

In Richtung des hinteren Endes 11 hat die Führungsbuchse 41,42,43,44 einen zylindrischen Außenumfang. Mit diesem ist sie in jeweils einer separate Öffnung am vorderen Ende eines Düsenkörpers einsetzbar, insbesondere durch Einstecken. Durch Auslegung des Abschnitts der Führungsbuchse 41,42,43,44 und der sie aufnehmenden Öffnung am vorderen Ende eines Düsenkörpers ist die Führungsbuchse 41,42,43,44 teleskopierbar gelagert. Damit die Führungsbuchse 41,42,43,44 leicht montiert werden kann verfügt sie am hinteren Ende 11 über eine Einführungsschräge. Zusätzlich bildet die teleskopische Lagerung eine Gleitdichtung aus. Diese Gleitdichtung 91,92,93,94 ist in axialer Richtung der Verschlussnadel 21,22,23,24 von drei Erweiterungsabschnitten 85,86,87,88 unterbrochen. Hier ist der Durchmesser jeweils größer als derjenige der Gleitdichtung 91,92,93,94. Dies verbessert die Dichtung und verringert die Reibung zwischen der Verschlussnadel 21,22,23,24 und der Führungsbuchse 41,42,43,44 bei einer Verschiebung von einer Offenstellung S2 in eine Geschlossenstellung.

Im Bereich des zylindrischen Außenumfangs am hinteren Ende 11 hat die Führungsbuchse 41,42,43,44 eine nicht parallel zur Durchgangsöffnung 51,52,53,54 verlaufenden Zuführungskanal 71,72,73,74. Dieser mündet in die Durchgangsöffnung 51,52,53,54 und ist mit einer Schmelzeführung eines Düsenkörpers strömungsverbindbar. Die Mündung 81,82,83,84 des Zuführkanals 71,72,73,74 mündet insbesondere zwischen der Gleitdichtung 91,92,93,94 und dem vorderen Ende 12 der Führungsbuchse 41,42,43,44 in die Durchgangsöffnung 51,52,53,54. Die Eintrittsöffnung des Zuführungskanals 71,72,73,74 liegt im zylindrischen Mantel am hinteren Ende 11 der Führungsbuchse 41,42,43,44. Insbesondere ist sie radial ausgerichtet.

In der Durchgangsöffnung 51,52,53,54 der Führungsbuchse 41,42,43,44 ist zwischen der Mündung 81,82,83,84 des Zuführungskanals 71,72,73,74 und der vom hinteren Ende 12 des Düsenkörpers abgewandten Seite der Durchgangsöffnung 51,52,53,54 eine Verschlussdichtfläche 95,96,97,98 ausgebildet. Diese bildet in einer Geschlossenstellung der zugeordneten Verschlussnadel 21,22,23,24 mit dieser eine Dichtung aus. Hierfür hat die Verschlussnadel 21,22,23,24 an ihrem vorderen Ende 12 eine Kegelspitze 75,76,77,78. Auch die Verschlussdichtfläche 95,96,97,98 ist kegelförmig ausgebildet. Die Verschlussdichtfläche 95,96,97,98 umfasst so die aufgenommene Verschlussnadel 21,22,23,24 in deren Geschlossenstellung.

Der Durchmesser der Durchgangsöffnung 51,52,53,54 der Führungsbuchse 41,42,43,44 ist zwischen der Mündung 75,76,77,78 des Zuführungskanals 71,72,73,74 und der Verschlussdichtfläche 95,96,97,98 größer als der Durchmesser der Verschlussnadel 21,22,23,24. Diese Kanalaufweitung 65,66,67,68 ermöglicht auch bei einer Geschlossenstellung der Verschlussnadel 21,22,23,24 ein Einströmen von Kunststoffschmelze bis zur Verschlussdichtfläche 95,96,97,98 innerhalb der Führungsbuchse 41,42,43,44.

Zur präzisen Führung der Spitze der Verschlussnadel 21,22,23,24 auch im Bereich der Verschlussdichtfläche 95,96,97,98 sind in der Kanalaufweitung 65,66,67,68 bis in den Bereich der Verschlussdichtfläche 95,96,97,98 ragende und axial ausgerichtete Führungsstege 55,56,57,58 zur Führung der Verschlussnadel 21,22,23,24 vorgesehen.

Ferner findet sich eine Dichtfläche 61,62,63,64 zur Abdichtung gegenüber einer Formangussplatte am vorderen Ende 12 der Führungsbuchse 41,42,43,44.

Am vorderen Ende 12 der Führungsbuchse 41,42,43,44 ist weiterhin ein radial nach außen weisender Flansch 25 angebracht. Dieser kann sich axial an einem Düsenkörper oder an einer Angussöffnung abstützten.

Die Dichtfläche 61,62,63,64 zur Abdichtung der Führungsbuchse 41,42,43,44 gegenüber einer Formangussplatte ist am vorderen Ende stirnseitig an der Führungsbuchse 41,42,43,44 angeordnet. Der Abstand dieser Dichtfläche 61,62,63,64 zu der Verschlussdichtfläche 95,96,97,98 innerhalb der Durchgangsöffnung 51,52,53,54 ist auf ein Minimum reduziert. Dieses Minimum basiert auf einer minimal notwendigen Wandstärke zur Gewährleistung der Stabilität der Führungsbuchse 41,42,43,44. Im Zentrum der Verschlussdichtfläche 95,96,97,98 und der stirnseitigen Dichtfläche 61,62,63,64 findet sich eine verjüngte Austrittsöffnung 59 der Durchgangsöffnung 51,52,53,54.

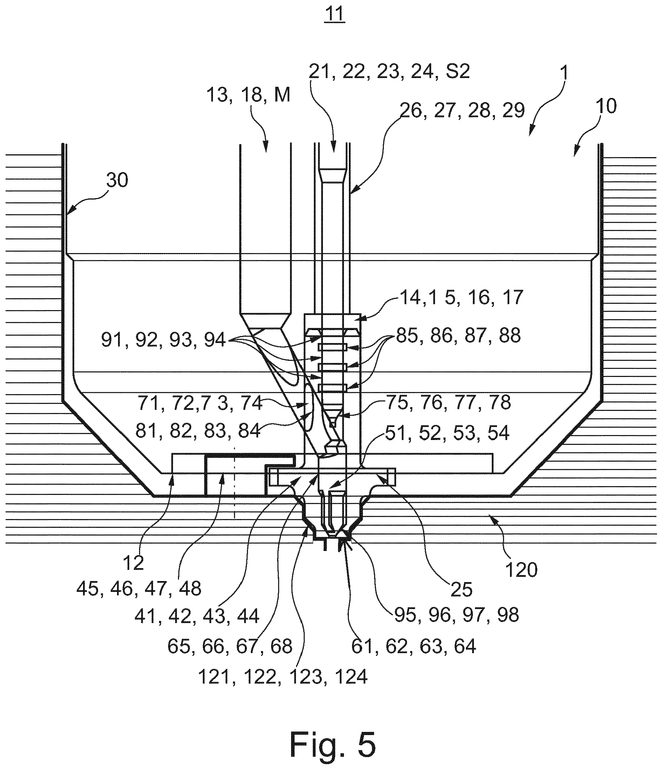

Fig. 5 zeigt einen Längsschnitt durch eine Spritzgießdüse 1, welche mit ihrem vorderen Ende 12 gegenüber einer Formangussplatte 120 angeordnet ist. Die Spritzgießdüse 1 weist einen Düsenkörper 10 auf, welcher sich von einem hinteren Ende 11 zu einem vorderen Ende 12 erstreckt. Das hintere Ende 11 ist an einer Materialzuführung anordenbar. Eine Verschlussnadel 21,22,23,24 durchdringt den Düsenkörper 10 vom hinteren Ende 11 zum vorderen Ende 12. Am Umfang des Düsenkörpers 10 findet sich eine Heizvorrichtung 30.

Für die Verschlussnadel 21,22,23,24 ist eine Führungsbuchse 41,42,43,44 am vorderen Ende 12 des Düsenkörpers 10 angeordnet. Die Führungsbuchse 41,42,43,44 weist eine axial zur Verschlussnadel 21,22,23,24 ausgerichtete Durchgangsöffnung 51,52,53,54 auf. In diese Durchgangsöffnung 51,52,53,54 mündet eine Schmelzeführung 13, welche sich vom hinteren Ende 11 in Richtung des vorderen Endes 12 durch den Düsenkörper 10 erstreckt. Die Führungsbuchse 41,42,43,44 weist eine die Durchgangsöffnung 51,52,53,54 radial umfassende Dichtfläche 61,62,63,64 auf. Diese ist dichtend zu einer Angussöffnung 121,122,123,124 in der Formangussplatte 120 angeordnet.

Die Führungsbuchse 41,42,43,44 ist in eine Öffnung 14,15,16,17 am vorderen Ende 12 des Düsenkörpers 10 eingesetzt. Diese Öffnung 14,15,16,17 hat einen zylindrischen Umfang und erstreckt sich koaxial zur Verschlussnadel 21,22,23,24. Auch die Führungsbuchse 41,42,43,44 weist einen zylindrischen Umfang im Bereich der Öffnung 14,15,16,17 auf. Hierdurch wird ein Einstecken der Führungsbuchse 41,42,43,44 in die Öffnung 14,15,16,17 ermöglicht. Insbesondere ist die Führungsbuchse 41,42,43,44 in der Öffnung 14,15,16,17 am vorderen Ende 12 des Düsenkörpers 10 axial teleskopierbar gelagert. Diese teleskopische Lagerung bildet eine Gleitdichtung aus. Dadurch wird eine Fixierung der Führungsbuchse 41,42,43,44 an der Formangussplatte 120 mittels eines Niederhalters 45,46,47,48 ermöglicht. Letzterer ist an der Formangussplatte 120 angeschraubt und hintergreift einen Flansch 25 der Führungsbuchse 41,42,43,44. Die Führungsbuchse 41,42,43,44 wird so stets mit ihrer Dichtfläche 61,62,63,64 an die Formangussplatte 120 angepresst. Thermische Längensausdehnungsänderungen des Düsenkörpers 10 können so ausgeglichen werden.

Ferner weist die Führungsbuchse 41,42,43,44 einen nicht parallel zur Durchgangsöffnung 51,52,53,54 verlaufenden Zuführungskanal 71,72,73,74 auf. Dieser mündet in die Durchgangsöffnung 51,52,53,54 und ist mit der Schmelzeführung 13 strömungsverbunden. Die Schmelzeführung 13 wiederrum ist als Schmelzekanal 18 ausgebildet, welcher sich erst unmittelbar im Bereich der Führungsbuchsen 14,15,16,17 verzweigt.

In der Durchgangsöffnung 51,52,53,54 der Führungsbuchse 41,42,43,44 ist zwischen der Mündung 81,82,83,84 des Zuführungskanals 71,72,73,74 und dem hinteren Ende 11 des Düsenkörpers 10 eine Gleitdichtung 91,92,93,94 ausgebildet. In dieser ist die Verschlussnadel 21,22,23,24 axial verschiebbar gelagert. Die Gleitdichtung 91,92,93,94 ist in axialer Richtung der Verschlussnadel 21,22,23,24 von drei Erweiterungsabschnitten 85,86,87,88 unterbrochen. Deren Durchmesser ist jeweils größer als derjenige der Gleitdichtung 91,92,93,94. Außerdem hat die Gleitdichtung 91,92,93,94 einen zylindrischen Umfang, der koaxial zur Verschlussnadel 21,22,23,24 ausgerichtet ist.

In der Durchgangsöffnung 51,52,53,54 der Führungsbuchse 41,42,43,44 findet sich zwischen der Mündung 81,82,83,84 des Zuführungskanals 71,72,73,74 und der vom hinteren Ende 12 des Düsenkörpers 10 abgewandten Seite der Durchgangsöffnung 51,52,53,54 eine Verschlussdichtfläche 95,96,97,98. In einer Geschlossenstellung der zugeordneten Verschlussnadel 21,22,23,24 bildet diese gemeinsam mit der Verschlussdichtfläche 95,96,97,98 eine Dichtung aus. Dabei ist die Verschlussdichtfläche 95,96,97,98 kegelförmig ausgebildet. D.h., die Verschlussdichtfläche 95,96,97,98 ist in Richtung des hinteren Endes 11 des Düsenkörpers 10 konisch aufweitend ausgebildet. Der korrespondierende Bereich der Verschlussnadel 21,22,23,24 ist als Kegelspitze 75,76,77,78 ausgebildet. In einer Geschlossenstellung der Verschlussnadel 21,22,23,24 wird letztere von der Verschlussdichtfläche 95,96,97,98 radial umfasst.

Die Durchgangsöffnung 51,52,53,54 der Führungsbuchse 41,42,43,44 hat zwischen der Mündung 75,76,77,78 des Zuführungskanals 71,72,73,74 und der Verschlussdichtfläche 95,96,97,98 einen größeren Durchmesser als die Verschlussnadel 21,22,23,24. In dieser Kanalaufweitung 65,66,67,68 sind bis in den Bereich der Verschlussdichtfläche 95,96,97,98 ragende und axial ausgerichtete Führungsstege 55,56,57,58 angeordnet. Diese dienen der Führung der Verschlussnadel 21,22,23,24.

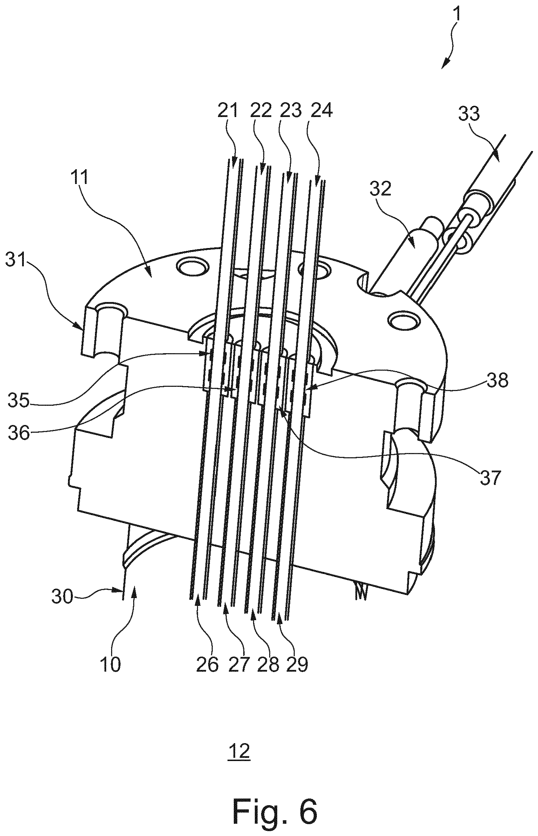

Fig. 6 ist ein dreidimensionaler Längsschnitt durch das hintere Ende 11 einer Spritzgießdüse 1 entnehmbar. An diesem Ende findet sich insbesondere ein Düsenkopf 31 eines Düsenkörpers 10 zur Befestigung der Spritzgießdüse 1 an einer zentralen Maschinendüse oder einem Verteiler. In einem weiter in Richtung des vorderen Endes 12 des Düsenkörpers 10 gelegenen Bereich ist dieser von einer radialen Heizvorrichtung 30 umgeben. Diese wird über einen radial in den Düsenkopf 31 führenden elektrischen Heizungsanschluss 32 mit elektrischer Energie versorgt. Parallel zu diesen Heizungsanschluss 32 führt ein zusätzlicher elektrischer Thermofühleranschluss 33 in den Düsenkopf 31.

Durch den Düsenkörper 10 erstrecken sich Verschlussnadeln 21,22,23,24 vom hinteren Ende 11 in Richtung des vorderen Endes 12. Gut erkennbar ist, dass die Durchgangsbohrungen 26,27,28,29 im Düsenkörper 10, durch welche die Verschlussnadeln 21,22,23,24 hindurchführen, einen größeren Durchmesser haben als die Verschlussnadeln 21,22,23,24. Lediglich am hinteren Ende 11 des Düsenkörpers 10, insbesondere im Bereich des Düsenkopfes 31 sind Lagerbuchsen 35, 36, 37, 38 in die Durchgangsbohrungen 26,27,28,29 eingesetzt. Die Durchgangsbohrungen 26,27,28,29 haben hierfür am hinteren Ende 11 einen geringfügig größeren Durchmesser als in Richtung vorderem Ende 12. Die Lagerbuchsen 35, 36, 37, 38 haben eine Lagerfläche, die von mehreren ringförmigen Nuten unterbrochen ist. Dies reduziert die Reibung zwischen den Verschlussnadeln 21,22,23,24 und den Lagerbuchsen 35, 36, 37, 38. Außerdem bilden die Lagerbuchsen 35, 36, 37, 38 eine Dichtung aus, deren Wirkung durch die radialen Nuten verbessert ist. Zwar sollte in diesem Bereich grundsätzlich keine Dichtung notwendig sein, sie bildet jedoch einen wirksamen Schutz bei einem Versagen einer anderen Dichtung. Die Gefahr eines Flutens des Spritzgießwerkzeugs 100 mit erstarrender Kunststoffschmelze wird so reduziert. Damit werden die Verschlussnadeln 21,22,23,24 am hinteren Ende 11 des Düsenkörpers 10 von den Lagerbuchsen 35,36,37,38 und am vorderen Ende 12 in den hier außerhalb der Bildfläche liegenden Führungsbuchsen 41,42,43,44 gelagert. Alle Lagerstellen sind entsprechend leicht austauschbar. Außerdem ist die Reibung einer jeden Verschlussnadel 21,22,23,24 bei einer Verstellung von einer Offenstellung S2 in eine Geschlossenstellung sehr gering.

Die Erfindung ist nicht auf eine der vorbeschriebenen Ausführungsformen beschränkt, sondern in vielfältiger Weise abwandelbar. Unter anderem kann die Anzahl an Führungshülsen und Ventilnadeln nach Bedarf festgelegt sein, es können mehrere Spritzgießdüsen an einem gemeinsamen Verteiler angeordnet sein und die Erfindung ist nicht auf eine axiale Ausrichtung der Ventilnadeln und der zugehörigen Lagerungen beschränkt. Vielmehr kann auch eine radiale Anordnung der Verschlussnadeln vorgesehen werden, wobei dann eine Verdrehsicherung zwischen einem Führungsmittel des Düsenkörpers und einem der Führungshülse ausgebildet sein sollte.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Spritzgießdüse | | |
| | | 41 | erste Führungsbuchse |
| 10 | Düsenkörper | 42 | zweite Führungsbuchse |
| 11 | hinteres Ende | 43 | dritte Führungsbuchse |
| 12 | vorderes Ende | 44 | vierte Führungsbuchse |
| 13 | Schmelzeführung | | |
| 14 | erste Öffnung | 45 | erster Niederhalter |
| 15 | zweite Öffnung | 46 | zweiter Niederhalter |
| 16 | dritte Öffnung | 47 | dritter Niederhalter |
| 17 | vierte Öffnung | 48 | vierter Niederhalter |
| 18 | Schmelzekanal | | |
| 19 | Speisungsöffnung | 51 | erste Durchgangsöffnung |
| | | 52 | zweite Durchgangsöffnung |
| 21 | erste Verschlussnadel | 53 | dritte Durchgangsöffnung |
| 22 | zweite Verschlussnadel | 54 | vierte Durchgangsöffnung |
| 23 | dritte Verschlussnadel | | |
| 24 | vierte Verschlussnadel | 55 | erste Führungsstege |
| 25 | Flansch | 56 | zweite Führungsstege |
| 251 | abgeflachte Seite | 57 | dritte Führungsstege |
| 26 | erste Durchgangsbohrung | 58 | vierte Führungsstege |
| 27 | zweite Durchgangsbohrung | | |
| 28 | dritte Durchgangsbohrung | 61 | erste Dichtfläche |
| 29 | vierte Durchgangsbohrung | 62 | zweite Dichtfläche |
| | | 63 | dritte Dichtfläche |
| 30 | Heizvorrichtung | 64 | vierte Dichtfläche |
| 31 | Düsenkopf | | |
| 32 | elektrischer Heizungsanschluss | 65 | erste Kanalaufweitung |
| 33 | elektrischer Thermofühleranschluss | 66 | zweite Kanalaufweitung |
| | | 67 | dritte Kanalaufweitung |
| 35 | erste Lagerbuchse | 68 | vierte Kanalaufweitung |
| 36 | zweite Lagerbuchse | | |
| 37 | dritte Lagerbuchse | 71 | erster Zuführungskanal |
| 38 | vierte Lagerbuchse | 72 | zweiter Zuführungskanal |
| 73 | dritter Zuführungskanal | 96 | zweite Verschlussdichtfläche |
| 74 | vierter Zuführungskanal | 97 | dritte Verschlussdichtfläche |
| 75 | erste Kegelspitze | 98 | vierte Verschlussdichtfläche |
| 76 | zweite Kegelspitze | | |
| 77 | dritte Kegelspitze | 100 | Spritzgießvorrichtung |
| 78 | vierte Kegelspitze | | |
| | | 110 | Materialzuführung |
| 81 | erste Mündung | 111 | Verteiler |
| 82 | zweite Mündung | 112 | Verteilerplatte |
| 83 | dritte Mündung | 113 | Anschlussdüse |
| 84 | vierte Mündung | 114 | Verteilerkanal |
| | | | |
| 85 | erster Erweiterungsabschnitt | 120 | Formangussplatte |
| 86 | zweiter Erweiterungsabschnitt | 121 | erste Angussöffnung |
| 87 | dritter Erweiterungsabschnitt | 122 | zweite Angussöffnung |
| 88 | vierter Erweiterungsabschnitt | 123 | dritte Angussöffnung |
| | | 124 | vierte Angussöffnung |
| 91 | erste Gleitdichtung | | |
| 92 | zweite Gleitdichtung | 140 | Antrieb |
| 93 | dritte Gleitdichtung | | |
| 94 | vierte Gleitdichtung | B | Dicke der Führungsbuchse |
| | | M | fließfähiges Material |
| 95 | erste Verschlussdichtfläche | S2 | Offenstellung |

## Patentansprüche

1. Spritzgießdüse (1) für eine Spritzgießvorrichtung (100) zum Verarbeiten eines fließfähigen Materials (M),
a) mit einem Düsenkörper (10), der ein hinteres Ende (11) und ein vorderes Ende (12) aufweist, wobei das hintere Ende (11) an einer Materialzuführung (110) und das vordere Ende (12) gegenüber einer Formangussplatte (120) anordenbar ist,
b) mit wenigstens zwei Verschlussnadeln (21, 22, 23, 24), die den Düsenkörper (10) vom hinteren Ende (11) zum vorderen Ende (12) durchdringen,
c) mit einer Schmelzeführung (13) für das fließfähige Material (M), die vom hinteren Ende (11) zum vorderen Ende (12) des Düsenkörpers (10) führt, wobei die Schmelzeführung (13) jeweils in die Durchgangsöffnungen (51, 52, 53, 54) der Verschlussnadeln (21, 22, 23, 24) mündet, und
d) mit einer Heizvorrichtung (30), die am Düsenkörper (10) angeordnet ist,
**dadurch gekennzeichnet,**
e) dass für jede Verschlussnadel (21, 22, 23, 24) am vorderen Ende (12) des Düsenkörpers (10) eine separate Führungsbuchse (41, 42, 43, 44) angeordnet ist, wobei jede Führungsbuchse (41, 42, 43, 44) eine axial zur jeweils zugehörigen Verschlussnadel (21, 22, 23, 24) ausgerichtete Durchgangsöffnung (51, 52, 53, 54) zur Aufnahme der jeweiligen Verschlussnadel (21, 22, 23, 24) aufweist,
f) dass die Führungsbuchsen (41, 42, 43, 44) benachbart und sich berührend angeordnet sind, und
g) dass jede Führungsbuchse (41, 42, 43, 44) eine die Durchgangsöffnung (51, 52, 53, 54) radial umfassende Dichtfläche (61, 62, 63, 64) aufweist, die dichtend zu einer Angussöffnung (121, 122, 123, 124) in einer Formangussplatte (120) anordenbar ist.

2. Spritzgießdüse (1) nach Anspruch 1, **dadurch gekennzeichnet, dass** jede Führungsbuchse (41, 42, 43, 44) in eine separate Öffnung (14, 15, 16, 17) am vorderen Ende (12) des Düsenkörpers (10) eingesetzt ist.

3. Spritzgießdüse (1) nach Anspruch 2, **dadurch gekennzeichnet, dass** jede Führungsbuchse (41, 42, 43, 44) in die jeweilige Öffnung (14, 15, 16, 17) am vorderen Ende (12) des Düsenkörpers (10) eingesteckt ist.

4. Spritzgießdüse (1) nach einem der Ansprüche 2 oder 3, **dadurch gekennzeichnet, dass** jede Führungsbuchse (41, 42, 43, 44) in der jeweilige Öffnung (14, 15, 16, 17) am vorderen Ende (12) des Düsenkörpers (10) axial telekopierbar gelagert ist.

5. Spritzgießdüse (1) nach einem der vorhergehenden Ansprüche, **dadurch gekennzeichnet, dass** sich die Schmelzeführung (13) im Bereich der Führungsbuchsen (41, 42, 43, 44) verzweigt.

6. Spritzgießdüse (1) nach einem der vorhergehenden Ansprüche, **dadurch gekennzeichnet, dass** jede Führungsbuchse (41, 42, 43, 44) einen nicht parallel zur Durchgangsöffnung (51, 52, 53, 54) verlaufenden Zuführungskanal (71, 72, 73, 74) aufweist, der in die Durchgangsöffnung (51, 52, 53, 54) mündet und mit der Schmelzeführung (13) strömungsverbunden ist.

7. Spritzgießdüse (1) nach Anspruch 6, **dadurch gekennzeichnet, dass** in der Durchgangsöffnung (51, 52, 53, 54) einer jeden Führungsbuchse (41, 42, 43, 44) zwischen der Mündung (81, 82, 83, 84) des Zuführungskanals (71, 72, 73, 74) und dem hinteren Ende (11) des Düsenkörpers (10) eine Gleitdichtung (91, 92, 93, 94) ausgebildet ist, in der die jeweilige Verschlussnadel (21, 22, 23, 24) axial verschiebbar gelagert ist.

8. Spritzgießdüse (1) nach Anspruch 7, **dadurch gekennzeichnet, dass** jede Gleitdichtung (91, 92, 93, 94) in axialer Richtung der zugehörigen Verschlussnadel (21, 22, 23, 24) von wenigstens einem Erweiterungsabschnitt (85, 86, 87, 88) unterbrochen ist, dessen Durchmesser jeweils größer ist als derjenige der Gleitdichtung (91, 92, 93, 94).

9. Spritzgießdüse (1) nach einem der Ansprüche 6 bis 8, **dadurch gekennzeichnet, dass** in der Durchgangsöffnung (51, 52, 53, 54) einer jeden Führungsbuchse (41, 42, 43, 44) zwischen der Mündung (81, 82, 83, 84) des Zuführungskanals (71, 72, 73, 74) und der vom hinteren Ende (12) des Düsenkörpers (10) abgewandten Seite der Durchgangsöffnung (51, 52, 53, 54) eine Verschlussdichtfläche (95, 96, 97, 98) ausgebildet ist, die in einer Geschlossenstellung der zugeordneten Verschlussnadel (21, 22, 23, 24) mit dieser eine Dichtung ausbildet.

10. Spritzgießdüse (1) nach Anspruch 9, **dadurch gekennzeichnet, dass** der Durchmesser der Durchgangsöffnung (51, 52, 53, 54) einer jeden Führungsbuchse (41, 42, 43, 44) zwischen der Mündung (75, 76, 77, 78) des Zuführungskanals (71, 72, 73, 74) und der Verschlussdichtfläche (95, 96, 97, 98) größer ist als der Durchmesser der jeweiligen Verschlussnadel (21, 22, 23, 24).

11. Spritzgießdüse (1) nach einem der Ansprüche 6 bis 10, **dadurch gekennzeichnet, dass** der Zuführungskanal (71, 72, 73, 74) einer jeden Führungsbuchse (41, 42, 43, 44) relativ zur Durchgangsöffnung (51, 52, 53, 54) radial aus der jeweiligen Führungsbuchse (41, 42, 43, 44) austritt.

12. Spritzgießdüse (1) nach einem der Ansprüche 6 bis 11, **dadurch gekennzeichnet, dass** die Durchgangsöffnung (51, 52, 53, 54) und der Zuführkanal (71, 72, 73, 74) einer jeden Führungsbuchse (41, 42, 43, 44) in jeweils einer gemeinsamen Ebene liegen, wobei die Dicke (B) der Führungsbuchse (41, 42, 43, 44) senkrecht zur Ebene dem Durchmesser der Durchgangsöffnung (51, 52, 53, 54) und/oder des Zuführungskanals (71, 72, 73, 74) zuzüglich einer minimal notwendigen Wandstärke entspricht.

13. Spritzgießdüse (1) nach einem der vorhergehenden Ansprüche, **dadurch gekennzeichnet, dass** die Führungsbuchsen (41, 42, 43, 44) verdrehgesichert im Düsenkörper (10) angeordnet sind.

14. Spritzgießdüse (1) nach einem der vorhergehenden Ansprüche, **dadurch gekennzeichnet, dass** jede Führungsbuchse (41, 42, 43, 44) in ihrem vorderen Bereich einen radial nach außen weisenden Flansch (25) aufweist, der gegenüberliegende abgeflachte Seitenflächen (251) aufweist, wobei jeweils zwei Führungsbuchsen (41, 42, 43, 44) mit ihren abgeflachten Seitenflächen (251) aneinander liegen.

15. Spritzgießvorrichtung (100) mit einer Spritzgießdüse (1) nach einem oder mehreren der vorhergehenden Ansprüche, wobei das hintere Ende (11) des Düsenkörpers (10) an der Materialzuführung (110) angeordnet ist, wobei das vordere Ende (12) des Düsenkörpers (10) gegenüber der Formangussplatte (120) angeordnet ist, und wobei jede Führungsbuchse (41, 42, 43, 44) mit ihrer Dichtfläche (61, 62, 63, 64) jeweils dichtend in einer separaten Angussöffnung (121, 122, 123, 124) angeordnet ist.

16. Spritzgießvorrichtung (100) nach Anspruch 15, **dadurch gekennzeichnet, dass** die Materialzuführung (110) einen Verteiler (111) umfasst.

17. Spritzgießvorrichtung (100) nach einem der Ansprüche 15 oder 16, **dadurch gekennzeichnet, dass** jede Führungsbuchse (41, 42, 43, 44) in ihrem vorderen Bereich einen radial nach außen weisenden Flansch (25) aufweist, und die Führungsbuchse (41, 42, 43, 44) von einem den Flansch (25) hintergreifenden Niederhalter (45, 46, 47, 48) an der Formangussplatte (120) festgelegt ist.

## Claims

1. Injection moulding nozzle (1) for an injection moulding apparatus (100) for processing a free-flowing material (M),
a) with a nozzle body (10) having a rear end (11) and a front end (12), wherein the rear end (11) can be disposed on a material feed (110) and the front end (12) opposite a moulding sprue plate (120),
b) with at least two closure needles (21, 22, 23, 24) penetrating the nozzle body (10) from the rear end (11) to the front end (12),
c) with a melt guide (13) for the free-flowing material (M), which leads from the rear end (11) to the front end (12) of the nozzle body (10), wherein the melt guide (13) respectively leads in to the through openings (51, 52, 53, 54) of the closure needles (21, 22, 23, 24), and
d) having a heating apparatus (30) that is disposed on the nozzle body (10), **characterised in that**
e) for each closure needle (21, 22, 23, 24) a separate guide bushing (41, 42, 43, 44) is disposed at the front end (12) of the nozzle body (10), wherein each guide bushing (41, 42, 43, 44) has a through opening (51, 52, 53, 54) for receiving the respective closure needle (21, 22, 23, 24) axially aligned to each associated closure needle (21, 22, 23, 24),
f) that the guide bushes (41, 42, 43, 44) are disposed adjacently and in contact, and
g) that each guide bushing (41, 42, 43, 44) has a sealing surface (61, 62, 63, 64) that radially surrounds the through opening (51, 52, 53, 54) and that can be disposed in a sealing manner against a sprue opening (121, 122, 123, 124) in a moulding sprue plate (120).

2. Injection moulding nozzle (1) according to claim 1, **characterised in that** each guide bushing (41, 42, 43, 44) is inserted in a separate opening (14, 15, 16, 17) at the front end (12) of the nozzle body (10).

3. Injection moulding nozzle (1) according to claim 2, **characterised in that** each guide bushing (41, 42, 43, and 44) is stuck in the respective opening (14, 15, 16, and 17) at the front end (12) of the nozzle body (10).

4. Injection moulding nozzle (1) according to one of claims 2 or 3, **characterised in that** each guide bushing (41, 42, 43, 44) is mounted axially telescopically extendible in the respective opening (14, 15, 16, 17) at the front end (12) of the nozzle body (10).

5. Injection moulding nozzle (1) according to one of the preceding claims, **characterised in that** the melt guide (13) branches in the region of the guide bushing (41, 42, 43, 44).

6. Injection moulding nozzle (1) according to one of the preceding claims, **characterised in that** each guide bushing (41, 42, 43, 44) has a feed channel (71, 72, 73, 74) that is not parallel to the through opening (51, 52, 53, 54), which leads into the through opening (51, 52, 53, 54) and is connected flow-wise to the melt guide (13).

7. Injection moulding nozzle (1) according to claim 6, **characterised in that** in the passage opening (51, 52, 53, 54) of each guide bushing (41, 42, 43, 44) between the mouth (81, 82, 83, 84) of the feed channel (71, 72, 73, 74) and the rear end (11) of the nozzle body (10) a sliding seal (91, 92, 93, 94) is formed, in which the respective closure needle (21, 22, 23, 24) is mounted in a manner capable of sliding axially.

8. Injection moulding nozzle (1) according to claim 7, **characterised in that** each sliding seal (91, 92, 93, 94) in the axial direction of the associated closure needle (21, 22, 23, 24) of at least one extension portion (85, 86, 87, 88) is interrupted, in which the diameter is greater than that of the sliding seal (91, 92, 93, 94).

9. Injection moulding nozzle (1) according to one of claims 6 to 8, **characterised in that** in the through opening (51, 52, 53, 54) of each guide bushing (41, 42, 43, 44) between the mouth (81, 82, 83, 84) of the feed channel (71, 72, 73, 74) and the side of the through opening (51, 52, 53, 54) facing away from the rear end (12) of the nozzle body (10), a closure sealing surface (95, 96, 97, 98) is formed, which forms a seal with the latter in a closed position of the associated closure needle (21, 22, 23, 24).

10. Injection moulding nozzle (1) according to claim 9, **characterised in that** the diameter of the through opening (51, 52, 53, 54) of each guide bushing (41, 42, 43, 44) between the mouth (75, 76, 77, 78) of the feed channel (71, 72, 73, 74) and the closure sealing surface (95, 96, 97, 98) is greater than the diameter of the respective closure needle (21, 22, 23, 24).

11. Injection moulding nozzle (1) according to one of claims 6 to 10, **characterised in that** the feed channel (71, 72, 73, 74) of each guide bushing (41, 42, 43, 44) relative to the through opening (51, 52, 53, 54) radially emerges out of the respective guide bushing (41, 42, 43, 44).

12. Injection moulding nozzle (1) according to one of claims 6 to 11, **characterised in that** the through opening (51, 52, 53, 54) and the feed channel (71, 72, 73, 74) of each guide bushing (41, 42, 43, 44) lie in each case in a common plane, wherein the thickness (B) of the guide bushing (41, 42, 43, 44) perpendicular to the plane corresponds to the diameter of the through opening (51, 52, 53, 54) and / or the feed channel (71, 72, 73, 74) plus a minimum necessary wall thickness.

13. Injection moulding nozzle (1) according to one of the preceding claims, **characterised in that** the guide bushing (41, 42, 43, 44) are disposed secured against rotation in the nozzle body (10).

14. Injection moulding nozzle (1) according to one of the preceding claims, **characterised in that** each guide bushing (41, 42, 43, 44) has in its front region a radially outwardly pointing flange (25) which has opposite flattened side surfaces (251), wherein every two guide bushings (41, 42, 43, 44) lie with their flattened side surfaces (251) on each other.

15. Injection moulding apparatus (100) having an injection moulding nozzle (1) according to one or more of the preceding claims, wherein the rear end (11) of the nozzle body (10) is disposed on the material feed (110), wherein the front end (12) of the nozzle body (10) is disposed opposite the mould sprue plate (120), and wherein each guide bushing (41, 42, 43, 44) with its sealing surface (61, 62, 63, 64) in each case is disposed in sealing-manner in a separate sprue opening (121, 122, 123, 124).

16. Injection moulding Apparatus (100) according to claim 15, **characterised in that** the material feed (110) comprises a distributor (111).

17. Injection moulding Apparatus (100) according to one of claims 15 or 16, **characterised in that** each guide bushing (41, 42, 43, 44) has a radially outwardly facing flange (25) in its front region and the guide bushing (41, 42, 43, 44) is fixed on the moulding sprue plate (120), by a down-holder (45, 46, 47, 48) engaging behind the flange (25).

## Revendications

1. Buse de moulage par injection (1) pour un dispositif de moulage par injection (100) pour travailler un matériau coulant (M),
a) avec un corps de buse (10) qui présente une extrémité arrière (11) et une extrémité avant (12), dans laquelle l'extrémité arrière (11) peut être aménagée sur une alimentation de matériau (110) et l'extrémité avant (12) en regard d'une plaque de coulée moulée (120),
b) avec au moins deux aiguilles de fermeture (21, 22, 23, 24), qui traversent le corps de buse (10) de l'extrémité arrière (11) à l'extrémité avant (12),
c) avec un guide de coulée (13) pour le matériau coulant (M) qui mène de l'extrémité arrière (11) à l'extrémité avant (12) du corps de buse (10), dans lequel le guide de coulée (13) débouche respectivement dans les ouvertures de passage (51, 52, 53, 54) des aiguilles de fermeture (21, 22, 23, 24) et
d) avec un dispositif de chauffage (30) qui est agencé dans le corps de buse (10),
**caractérisée en ce que** :
e) pour chaque aiguille de fermeture (21, 22, 23, 24), il est agencé à l'extrémité avant (12) du corps de buse (10) un manchon de guidage séparé (41, 42, 43, 44), dans lequel chaque manchon de guidage (41, 42, 43, 44) présente une ouverture de passage (51, 52, 53, 54) dirigée axialement vers l'aiguille de fermeture respectivement connexe (21, 22, 23, 24) pour recevoir l'aiguille de fermeture respective (21, 22, 23, 24),
f) les manchons de guidage (41, 42, 43, 44) sont agencés au voisinage et se touchent et
g) chaque manchon de guidage (41, 42, 43, 44) présente une face d'étanchéité (61, 62, 63, 64) comprenant radialement l'ouverture de passage (51, 52, 53, 54), laquelle face qui peut être aménagée de manière étanche à une ouverture de coulée (121, 122, 123,124) dans une plaque de coulée moulée (120).

2. Buse de moulage par injection (1) selon la revendication 1, **caractérisée en ce que** chaque manchon de guidage (41, 42, 43, 44) est insérée dans une ouverture séparée (14, 15, 16, 17) à l'extrémité avant (12) du corps de buse (10).

3. Buse de moulage par injection (1) selon la revendication 2, **caractérisée en ce que** chaque manchon de guidage (41, 42, 43, 44) est enfichée dans l'ouverture respective (14, 15, 16, 17) à l'extrémité avant (12) du corps de buse (10).

4. Buse de moulage par injection (1) selon l'une quelconque des revendications 2 ou 3, **caractérisée en ce que** chaque manchon de guidage (41, 42, 43, 44) est monté axialement de manière télescopique dans l'ouverture respective (14, 15, 16, 17) à l'extrémité avant (12) du corps de buse (10).

5. Buse de moulage par injection (1) selon l'une quelconque des revendications précédentes, **caractérisée en ce que** le guide de coulée (13) se ramifie dans la zone des manchons de guidage (41, 42, 43, 44).

6. Buse de moulage par injection (1) selon l'une quelconque des revendications précédentes, **caractérisée en ce que** chaque manchon de guidage (41, 42, 43, 44) présente un canal d'alimentation (71, 72, 73, 74) s'étendant de manière non parallèle à l'ouverture de passage (51, 52, 53, 54), lequel canal débouche dans l'ouverture de passage (51, 52, 53, 54) et se lie en mode d'écoulement au guide de coulée (13).

7. Buse de moulage par injection (1) selon la revendication 6, **caractérisée en ce qu'**un joint étanche glissant (91, 92, 93, 94) est formé dans l'ouverture de passage (51, 52, 53, 54) d'un manchon de guidage respectif (41, 42, 43, 44) entre l'embouchure (81, 82, 83, 84) du canal d'alimentation (71, 72, 73, 74) et l'extrémité arrière (11) du corps de buse (10), dans lequel joint étanche l'aiguille de fermeture respective (21, 22, 23, 24) est montée mobile axialement.

8. Buse de moulage par injection (1) selon la revendication 7, **caractérisée en ce que** chaque joint étanche glissant (91, 92, 93, 94) est interrompu dans la direction axiale de l'aiguille de fermeture connexe (21, 22, 23, 24) d'au moins une section d'évasement (85, 86, 87, 88), dont le diamètre est respectivement plus grand que celui du joint étanche glissant (91, 92, 93, 94).

9. Buse de moulage par injection (1) selon l'une quelconque des revendication 6 à 8, **caractérisée en ce qu'**il est formé dans l'ouverture de passage (51, 52, 53, 54) d'un manchon de guidage respectif (41, 42, 43, 44) entre l'embouchure (81, 82, 83, 84) du canal d'alimentation (71, 72, 73, 74) et le côté de l'ouverture de passage (51, 52, 53, 54) tourné à l'opposé de l'extrémité arrière (12) du corps de buse (10) une surface d'étanchéité de fermeture (95, 96, 97, 98) qui, dans une position fermée de l'aiguille de fermeture affectée (21, 22, 23, 24), forme avec celle-ci un joint d'étanchéité.

10. Buse de moulage par injection (1) selon la revendication 9, **caractérisée en ce que** le diamètre de l'ouverture de passage (51, 52, 53, 54) d'un manchon de guidage respectif (41, 42, 43, 44) entre l'embouchure (75, 76, 77, 78) du canal d'alimentation (71, 72, 73, 74) et la surface d'étanchéité de fermeture (95, 96, 97, 98) est plus grand que le diamètre de l'aiguille de fermeture respective (21, 22, 23, 24).

11. Buse de moulage par injection (1) selon l'une quelconque des revendications 6 à 10, **caractérisée en ce que** le canal d'alimentation (71, 72, 73, 74) d'un manchon de guidage respectif (41, 42, 43, 44) par rapport à l'ouverture de passage (51, 52, 53, 54) sort radialement du manchon de guidage respectif (41, 42, 43, 44).

12. Buse de moulage par injection (1) selon l'une quelconque des revendications 6 à 11, **caractérisée en ce que** l'ouverture de passage (51, 52, 53, 54) et le canal d'alimentation (71, 72, 73, 74) d'un manchon de guidage respectif (41, 42, 43, 44) se trouvent respectivement dans un plan commun, dans lequel l'épaisseur (B) du manchon de guidage (41, 42, 43, 44) correspond, perpendiculairement au plan, au diamètre de l'ouverture de passage (51, 52, 53, 54) et/ou du canal d'alimentation (71, 72, 73, 74) en plus d'une épaisseur de paroi minimale nécessaire.

13. Buse de moulage par injection (1) selon l'une quelconque des revendications précédentes, **caractérisée en ce que** les manchons de guidage (41, 42, 43, 44) sont agencés solidaires en rotation dans le corps de buse (10).

14. Buse de moulage par injection (1) selon l'une quelconque des revendications précédentes, **caractérisée en ce que** chaque manchon de guidage (41, 42, 43, 44) présente dans sa zone avant une bride (25) tournée radialement vers l'extérieur, qui présente des surfaces latérales aplaties opposées (251), dans lequel deux manchons de guidage (41, 42, 43, 44) sont contigus avec leurs surfaces latérales aplaties (251).

15. Dispositif de moulage par injection (100) avec une buse de moulage par injection (1) selon une ou plusieurs des revendications précédentes, dans lequel l'extrémité arrière (11) du corps de buse est agencée sur l'alimentation de matériau (110), dans lequel l'extrémité avant (12) du corps de buse (10) est agencée en regard de la plaque de coulée moulée (120) et dans lequel chaque manchon de guidage (41, 42, 43, 44) est agencé avec sa surface d'étanchéité (61, 62, 63, 64) qui est étanchée respectivement dans une ouverture de coulée séparée (121, 122, 123, 124).

16. Dispositif de moulage par injection (100) selon la revendication 15, **caractérisé en ce que** l'alimentation en matériau (110) comprend un distributeur (111).

17. Dispositif de moulage par injection (100) selon l'une quelconque des revendications 15 ou 16, **caractérisé en ce que** chaque manchon de guidage (41, 42, 43, 44) présente dans sa zone avant une bride tournée radialement vers l'extérieur (25) et le manchon de guidage (41, 42, 43, 44) est fixé par une retenue (45, 46, 47, 48) bloquant la bride (25) sur la plaque de coulée moulée (120).
